# EUROPEAN PATENT APPLICATION

(11) **EP 4 102 439 A1**
(43) Date of publication of application: **14.12.2022**
(21) Application number: 21780808.8
(22) Date of filing: 23.03.2021
(51) Int. Cl.: G06Q 40/08

(54) **SERVER DEVICE, TERMINAL DEVICE, INFORMATION PROCESSING PROGRAM, AND INFORMATION PROCESSING METHOD**

(30) Priority: 31.03.2020 JP 2020065186
(71) Applicant: Sony Group Corporation, Tokyo 108-0075 (JP)
(72) Inventor: SHIMIZU, Yusuke, Tokyo 108-0075 (JP); MORI, Masashi, Tokyo 108-0075 (JP); NISHI, Ayaka, Tokyo 108-0075 (JP)
(74) Representative: D Young & Co LLP
(86) International application number: PCT/JP2021/011855
(87) International publication number: WO 2021/200362

(57) **Abstract**

A server device, a terminal device, an information processing program, and an information processing method capable of giving the premium back to a purpose appropriate for the user are provided. A server device (10) according to the present disclosure includes a generation section (112) that acquires insurance type information (201) indicating a type of insurance that a user purchases and pertaining information (202) related to the insurance, and generates a candidate list (30) of donation recipients including information regarding one or more donation recipients on the basis of the insurance type information and the pertaining information that have been acquired.

## Description

### TECHNICAL FIELD

The present disclosure relates to a server device, a terminal device, an information processing program, and an information processing method.

### BACKGROUND ART

A premium is basically decided on the basis of a past record and current and future records, and a mechanism in which a reduced premium is given back to the user is also provided. The past record is a situation at the time point when the user signs the insurance contract, and in the examples of automobile insurance, the pay-as-you-drive insurance based on the age, attribute, vehicle, travel distance, and the like of the user corresponds. Furthermore, the current and future records are situations after the time point when the user has signed the insurance contract, and in the examples of automobile insurance, the pay-how-you-drive insurance based on how the user has traveled, sensing information in the vehicle, and the like corresponds.

Conventionally, in a case where a user who purchases insurance makes an effort to suppress premium payment and the user is not paid the premium, the premium that the user has paid to the insurer leads to a profit of the insurer, and the policyholder has been dissatisfied. On the other hand, a mechanism has been proposed in which, in a case where payment of a premium is suppressed due to safe driving or the like, the profit of the automobile insurer is contributed to a predetermined donation recipient to give it back to society (for example, Patent Document 1).

### CITATION LIST

### PATENT DOCUMENT

Patent Document 1: Japanese Patent Application Laid-Open No. 2008-123491

### SUMMARY OF THE INVENTION

### PROBLEMS TO BE SOLVED BY THE INVENTION

However, with the technology of Patent Document 1, it is difficult to reflect the user's behavior and preference as well as the user's decision into designation of the donation recipient, and there is a concern that an unwilling donation recipient for the user is set.

The present disclosure provides a server device, a terminal device, an information processing program, and an information processing method capable of giving the premium back to a purpose appropriate for the user.

### SOLUTIONS TO PROBLEMS

A server device according to the present disclosure includes a generation section that acquires insurance type information indicating a type of insurance that a user purchases and pertaining information related to the insurance, and generates a candidate list of donation recipients including information regarding one or more donation recipients on the basis of the insurance type information and the pertaining information that have been acquired.

### BRIEF DESCRIPTION OF DRAWINGS

Fig. 1 is a schematic view for explaining an outline of a system according to the present disclosure.
Fig. 2 is a block diagram schematically illustrating a system configuration according to an embodiment of the present disclosure.
Fig. 3 is a functional block diagram of an example for explaining a function of an insurer server according to the embodiment.
Fig. 4 is a functional block diagram of an example for explaining a function of a terminal device according to the embodiment.
Fig. 5 is a functional block diagram of an example for explaining a function of a social contribution and donation recipient-related organization system that can be applied to the embodiment.
Fig. 6 is a functional block diagram of an example for explaining a function of an insurance company system that can be applied to the embodiment.
Fig. 7 is a block diagram illustrating a hardware configuration of an example of an insurer server that can be applied to the embodiment.
Fig. 8 is a block diagram illustrating a hardware configuration of an example of a terminal device that can be applied to the embodiment.
Fig. 9 is a sequence diagram of an example illustrating processing in the system according to the embodiment.
Fig. 10 is a schematic view illustrating an example of an insurance type selection screen according to the embodiment.
Fig. 11 is a schematic view illustrating an example of a pertaining information input screen according to the embodiment.
Fig. 12 is a schematic view illustrating an example of a structure of data including pertaining information that can be applied to the embodiment.
Fig. 13 is a schematic view illustrating an example of candidates of donation recipients included in a candidate list according to the embodiment.
Fig. 14 is a view schematically illustrating processing in which a list generation section automatically generates a candidate list with reference to a table that can be applied to the embodiment.
Fig. 15 is a schematic view illustrating an example of a social contribution and donation recipient selection screen according to the embodiment.
Fig. 16 is a schematic view illustrating an example of a decision confirmation screen according to the embodiment.
Fig. 17 is a functional block diagram of an example for explaining a function of an insurer server according to a modification of the embodiment.
Fig. 18 is a functional block diagram of an example for explaining a function of a terminal device according to a modification of the embodiment.

### MODE FOR CARRYING OUT THE INVENTION

An embodiment of the present disclosure will be described below in detail on the basis of the drawings. Note that in the following embodiment, the same parts are given the same reference signs, and thus redundant description will be omitted.

The embodiment of the present disclosure will be described below in the following order.
1. Outline of system according to present disclosure
2. Regarding embodiment
   2-1. More specific configuration of system according to embodiment
      2-1-1. Outline of system
      2-1-2. Function of server device
      2-1-3. Function of terminal device
      2-1-4. Function of other system
      2-1-5. Hardware configuration example
   2-2. Specific processing according to embodiment
3. Modification of embodiment
4. Further modification of embodiment

### [1. Outline of system according to present disclosure]

First, an outline of a system according to the present disclosure will be described. The system according to the present disclosure generates a candidate list in which candidates for social contribution and donation recipients are listed on the basis of pertaining information on insurance input when a user purchases the insurance. When purchasing the insurance, by selecting a desired candidate from this candidate list, the user can donate a part of the paid premium to the selected candidate as a donation recipient.

More specifically, the user operates an application program (hereinafter, referred to as insurance purchase app) according to the present disclosure installed on a terminal device such as a smartphone, selects the type of insurance to purchase, inputs insurance information, user's attribute information, and preference information, and transmits them to the insurer server according to the present disclosure. At this time, the user further transmits pertaining information related to the selected insurance type to an insurance business server. On the basis of the transmitted user's attribute information, personal information, and pertaining information, the insurer server generates a candidate list of social contribution and donation recipients, transmits it to the terminal device, and presents it to the user. The user selects a desired social contribution and donation recipient from this presented candidate list, and transmits it to the insurer server. The insurer server donates a surplus of the insurance purchased by the user to the social contribution and donation recipient selected by the user.

As a specific example, it is assumed that travel insurance is selected as the insurance type, a country to visit "France" and a city/area to visit "Paris" are input as the pertaining information, and as a result of traveling in consideration of safety, payout of the travel insurance benefit becomes zero. In this case, the insurer server sets, for example, a repair project of a building "Notre Dame Cathedral" in Paris as a donation recipient on the basis of the pertaining information. For example, it is assumed that travel insurance is selected as the insurance type, a country to visit "Japan" and a city/area to visit "Okinawa" are input as the pertaining information, and as a result of traveling in consideration of safety, payout of the travel insurance benefit becomes zero. In this case, the insurer server sets, for example, a repair project of a building "Shuri Castle" in Okinawa as a donation recipient on the basis of the pertaining information.

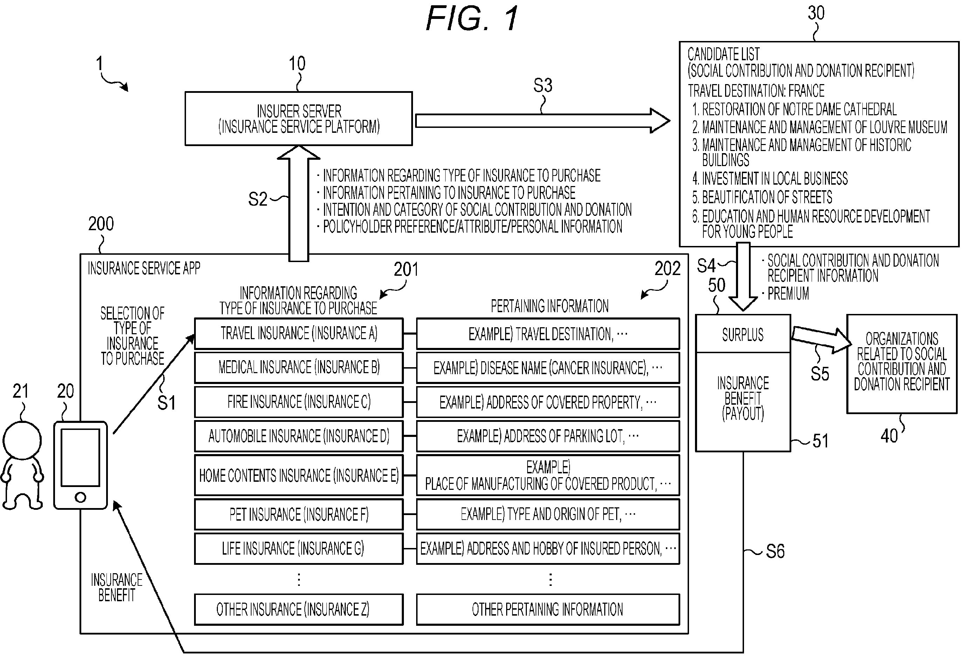

Fig. 1 is a schematic view for explaining an outline of the system according to the present disclosure. The system according to the present disclosure includes an insurer server 10 and an insurance service app installed on a terminal device 20 used by a user 21. The user 21 operates the terminal device 20 to select the insurance type of the insurance to purchase (step S1).

In the example of Fig. 1, an insurance service app 200 can support insurance type information 201 indicating each insurance type of travel insurance (insurance A), medical insurance (insurance B), fire insurance (insurance C), automobile insurance (insurance D), home contents insurance (insurance E), pet insurance (insurance F), life insurance (insurance G), ..., and other insurance (insurance Z). Thus, the insurance type information is information indicating the type of insurance such as coverage of the insurance, for example. For example, the insurance type "travel insurance" indicates that the insurance includes items regarding travel as the content of the insurance. At this time, the content of the item related to travel may be different depending on the insurance company.

Furthermore, pertaining information 202 is associated with each insurance type. The pertaining information 202 is related information generated in accordance with the content of the insurance indicated by the insurance type. For example, the pertaining information associated with travel insurance is, for example, a travel destination or the like, the pertaining information associated with medical insurance is, for example, a disease name (cancer insurance) or the like, and the pertaining information associated with fire insurance is, for example, an address of an insured property or the like. Furthermore, the pertaining information associated with automobile insurance is, for example, an address of a parking lot or the like, the pertaining information associated with home contents insurance is, for example, a place of manufacturing of a covered product or the like, the pertaining information associated with pet insurance is, for example, a type and an origin of a pet or the like, and the pertaining information associated with life insurance is, for example, an address, a hobby of an insured person or the like.

Note that each of the insurance types and each piece of the pertaining information described above are examples for explanation, and are not limited to those in this example.

The user 21 inputs, to the insurance service app 200, information indicating intention and category of social contribution and donation, preference information indicating preference of the user 21, attribute information, personal information, and the like of the user 21, in addition to the insurance type to purchase. By the insurance service app 200, the terminal device 20 transmits, to the insurer server 10, each of those pieces of information having been input and the insurance type information indicating the insurance type selected in response to the user 21 operation (step S2).

The insurer server 10 according to the present disclosure is a platform for each service by a plurality of insurers, and serves as an intermediary between the user 21 and the plurality of insurers. Furthermore, on the basis of the preference information, the attribute information, and the personal information of the user 21, and the pertaining information that have been transmitted from the terminal device 20, the insurer server 10 according to the present disclosure generates a candidate list 30 in which candidates for social contribution and donation recipients estimated to be appropriate for the user 21 are listed (step S3).

In the example of Fig. 1, on the basis of each piece of information transmitted from the terminal device 20, in a case where the travel insurance is selected as the insurance type, and the travel destination is "France" on the basis of the pertaining information or insurance information, for example, the insurer server 10 presents, as candidates for social contribution and donation recipients, six items of "1. Restoration of Notre Dame Cathedral", "2. Maintenance and management of Louvre Museum", "3. Maintenance and control of historic buildings", "4. Investment in local business", "5. Beautification of streets", and "6. Education and human resource development for young people" in the candidate list 30.

This candidate list 30 is presented (not illustrated) to the terminal device 20 of the user 21. Furthermore, a premium is separately presented (not illustrated) from the insurance company to the terminal device 20 of the user 21. The user 21 selects one desired item as social contribution and donation recipient from the six items included in the candidate list 30 using the terminal device 20, and in a case of accepting the premium presented from the insurance company, for example, the user notifies the insurance company of that effect, and signs the insurance (step S4) .

It is assumed that as a result of the user 21 having traveled in consideration of safety, payment of travel insurance benefit from the insurance company to the user 21 has become zero or equal to or less than a predetermined amount. In this case, predetermined calculation is performed on the basis of the premium paid by the user 21 to the insurance company, and a surplus 50 of the premium is calculated. The calculated surplus 50 is donated to the social contribution and donation recipient (in this example, an organization 40 related to social contribution and donation recipient) selected by the user 21 from the candidate list 30 (step S5). Thus, the donation recipient (social contribution and donation recipient) refers to a target to which the user 21 provides financial assistance without expecting any financial return to the user himself/herself.

On the other hand, in a case where payment of an insurance benefit 51 to the user 21 occurs, for example, the insurance company pays a predetermined amount of the insurance benefit 51 to the user 21 (step S6).

Thus, in the system according to the present disclosure, since the social contribution and donation recipient of the surplus 50 of the insurance is selected on the basis of the pertaining information transmitted by the user 21, it is possible to avoid the situation in which a donation is made to an unwilling donation recipient for the user 21. Furthermore, also for the insurance company, there is a possibility that the evaluation for the insurance company is improved by using the surplus 50 of the insurance for the purpose intended by the user, and in this case, it can be expected that the evaluation is reflected in the number of contracts or the like.

### (2. Regarding embodiment)

### (2-1. More specific configuration of system according to embodiment)

Next, a more specific configuration of the system according to the embodiment of the present disclosure will be described.

### (2-1-1. Outline of system)

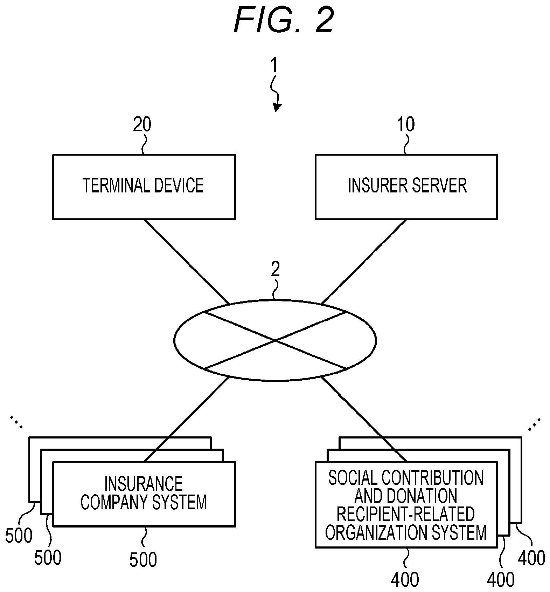

Fig. 2 is a block diagram schematically illustrating the system configuration according to the embodiment of the present disclosure. In Fig. 2, an insurance system 1 according to the embodiment of the present disclosure includes the insurer server 10 and the terminal device 20 each connected to a network 2 such as the Internet. Furthermore, the network 2 is connected with one or more related organization systems 400 of social contribution and donation recipients (hereinafter, social contribution and donation recipient-related organization system 400) and one or more insurance company systems 500. Note that the social contribution and donation recipient-related organization system 400 is a system run by a related organization for social contribution, and the related organization is an organization mainly engaged in public and non-profitable activities.

As described above, the terminal device 20 is an information processing device operated by the user 21 who wishes to purchase insurance of an insurance company, and is a so-called mobile terminal such as a multifunctional mobile phone terminal (smartphone) and a tablet computer. Being not limited to this, the terminal device 20 may be a desktop personal computer or may be a terminal device designed exclusively for the insurance system 1 of the present disclosure.

Note that in the following, the explanation will be made on an assumption that one social contribution and donation recipient-related organization system 400 corresponds to one type of social contribution and donation, and one insurance company system 500 corresponds to one insurance type. Obviously, one social contribution and donation recipient-related organization system 400 may correspond to a plurality of types of social contribution and donations, and one insurance company system 500 may correspond to a plurality of insurance types.

### (2-1-2. Function of server device)

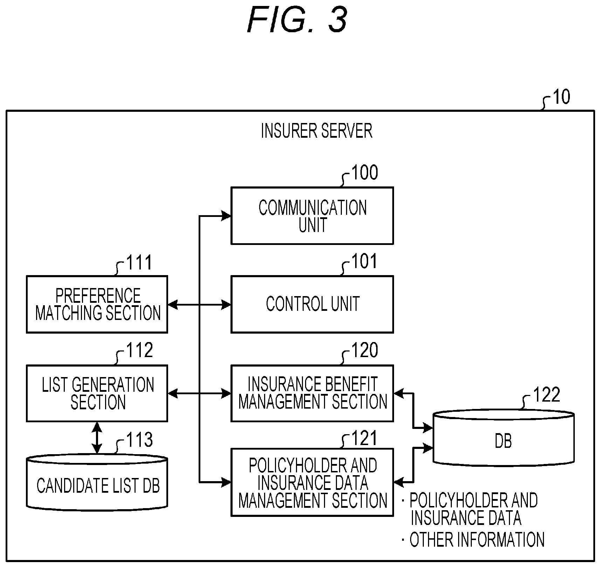

Fig. 3 is a functional block diagram of an example for explaining the function of the insurer server 10 according to the embodiment. In Fig. 3, the insurer server 10 includes a communication unit 100, a control unit 101, a preference matching section 111, a list generation section 112, a candidate list database (DB) 113, an insurance benefit management section 120, a policyholder and insurance data management section 121, and a database (DB) 122.

The communication unit 100, the control unit 101, the preference matching section 111, the list generation section 112, the candidate list DB 113, the insurance benefit management section 120, the policyholder and insurance data management section 121, and the DB 122 are implemented by a program operating on a CPU. Not limited to this, some or all of the communication unit 100, the control unit 101, the preference matching section 111, the list generation section 112, the candidate list DB 113, the insurance benefit management section 120, the policyholder and insurance data management section 121, and the DB 122 may be implemented by a hardware circuit operating in cooperation with one another.

The control unit 101 controls the entire operation of this insurer server 10. The communication unit 100 executes communication with respect to the network 2 under the control of the control unit 101.

The DB 122 includes a database of information regarding an insurance policyholder and insurance purchased by a policyholder. For example, the DB 122 includes a policyholder and insurance data DB that is a database of information on the policyholder and insurance information by each insurance company and the like, and another information DB that is a database of other information.

The policyholder and insurance data DB includes personal information, attribute information, preference information, behavior information, and pertaining information of a policyholder as information acquired from the policyholder of insurance, for example. Here, the personal information of the policyholder includes information regarding the individual policyholder such as a name, an address, and proprietary properties such as real estate and an automobile. The attribute information of the policyholder is information regarding the nature and characteristics unique to the individual policyholder, and includes objective information regarding the policyholder such as an organization (work place, and the like) to which the policyholder belongs and appearance characteristics. The personal information and the attribute information may include overlapping items. The preference information is information indicating the fondness of the policyholder, and includes information based on the subjectivity of the policyholder such as sports, movies, music, reading, recreational items, and favorites that the policyholder enjoys. Furthermore, the behavior information includes information on behavior that the policyholder routinely takes on, such as walking or shopping.

Furthermore, the policyholder and insurance data DB includes, as data of insurance information, insurance type information, insurance conditions, and information indicating items of pertaining information for each insurance type. The other information DB can include, for example, information on each insurance company related to the system, and information on an organization related to social contribution and donation recipient.

On the basis of, for example, the above-described other information stored in the DB 122, the insurance benefit management section 120 manages reception and payment related to insurance, such as the premium paid by the policyholder to each insurance company and its surplus, and insurance benefit paid from each insurance company to the policyholder. The policyholder and insurance data management section 121 manages information regarding, for example, the above-described policyholder or the insurance purchased by the policyholder that are stored in the DB 122.

The candidate list DB 113 includes a database of information regarding candidates for social contribution and donation recipients. The preference matching section 111 performs matching between preference information indicating preference of the user 21 who wishes to purchase insurance, transmitted from the terminal device 20, and candidates for social contribution and donation recipients stored in the candidate list DB 113.

The list generation section 112 generates the candidate list 30 of social contribution and donation recipients to be presented to the user 21 who wishes to purchase the insurance. The list generation section 112 generates the candidate list 30 of the social contribution and donation recipients on the basis of, for example, the personal information, the attribute information, the preference information, the behavior information, the pertaining information, and the insurance type that have been transmitted from the terminal device 20 by the user 21, the matching result by the preference matching section 111, and candidates of social contribution and donation recipients stored in the candidate list DB 113. The generated candidate list 30 is transmitted to the terminal device 20 by the communication unit 100.

### (2-1-3. Function of terminal device)

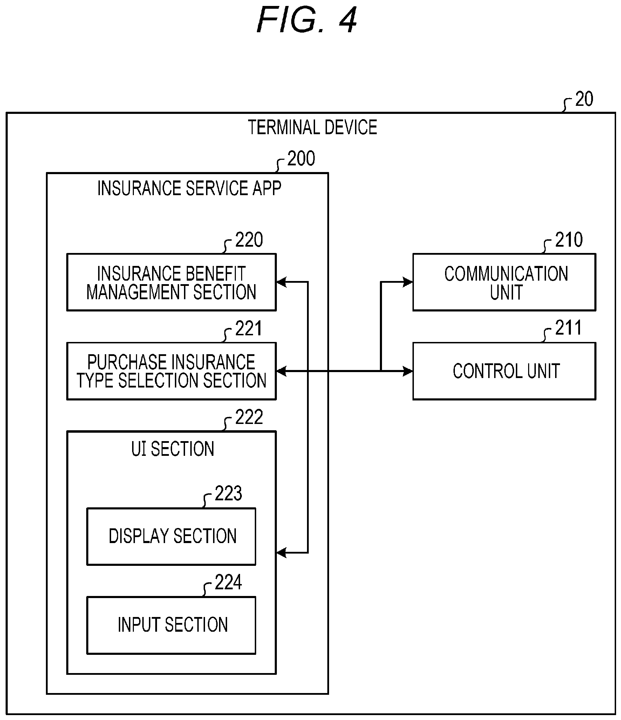

Fig. 4 is a functional block diagram of an example for explaining the function of the terminal device 20 according to the embodiment. In Fig. 4, the terminal device 20 includes the insurance service app 200, a communication unit 210, and a control unit 211.

The communication unit 210 and the control unit 211 are included in, for example, basic software (for example, an operating system (OS)) installed in advance in this terminal device 20. The control unit 101 controls the entire operation of this insurer server 10. The communication unit 100 executes communication with respect to the network 2 under the control of the control unit 101.

The insurance service app 200 is an application program configured in the terminal device 20 by being downloaded and installed in the terminal device 20 via the network 2, for example. The insurance service app 200 includes an insurance benefit management section 220, a purchase insurance type selection section 221, and a user interface (UI) section 222.

The UI section 222 implements a user interface according to the embodiment in the terminal device 20, and includes a display section 223 and an input section 224. The display section 223 generates a screen to be displayed on a display device included in the terminal device 20 or connected to the terminal device 20. The input section 224 receives a user operation on an input device included in the terminal device 20 or connected to the terminal device 20.

The insurance benefit management section 220 manages reception and payment related to insurance, such as the premium transmitted from the terminal device 20 and the insurance benefit paid to the user 21. The purchase insurance type selection section 221 selects the insurance type of the insurance for the user 21 to purchase in response to the user operation of the user 21 on the terminal device 20. The information indicating each insurance type may be held in the insurance service app 200 in advance or may be acquired from the insurer server 10 via the network 2.

### (2-1-4. Function of other system)

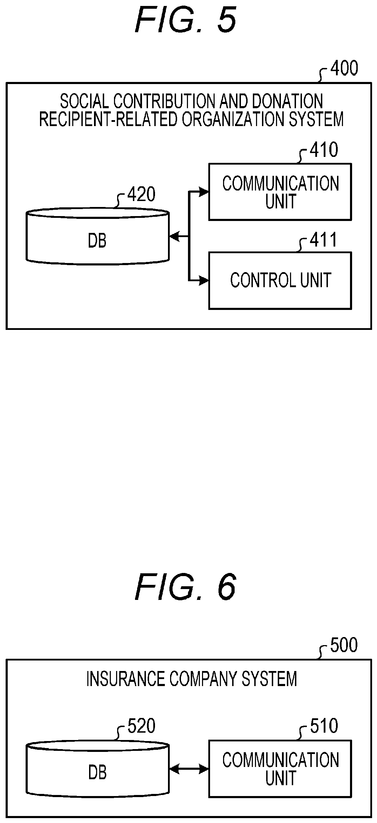

Fig. 5 is a functional block diagram of an example for explaining the function of the social contribution and donation recipient-related organization system 400 that can be applied to the embodiment. As illustrated in Fig. 5, the social contribution and donation recipient-related organization system 400 includes a communication unit 410, a control unit 411, and a DB 420 as functions related to the embodiment. The control unit 411 controls the entire operation of the social contribution and donation recipient-related organization system 400. The communication unit 410 controls communication with respect to the network 2 under the control of the control unit 411. The DB 420 is a database of information regarding a public project associated with this social contribution and donation recipient-related organization system 400, for example.

Fig. 6 is a functional block diagram of an example for explaining the function of the insurance company system 500 that can be applied to the embodiment. Here, the insurance company system 500 is a system in an insurance company that is actually paid the premium and pays the insurance benefit. In the example of Fig. 6, the insurance company system 500 includes a communication unit 510 and a DB 520 as functions related to the embodiment. The communication unit 510 executes communication with respect to the network 2. The DB 520 is a database of information regarding the insurance, and the information of the policyholder of the insurance is managed in this DB 520.

### (2-1-5. Hardware configuration example)

Next, a hardware configuration example of the insurer server 10 and the terminal device 20 that can be applied to the embodiment will be described.

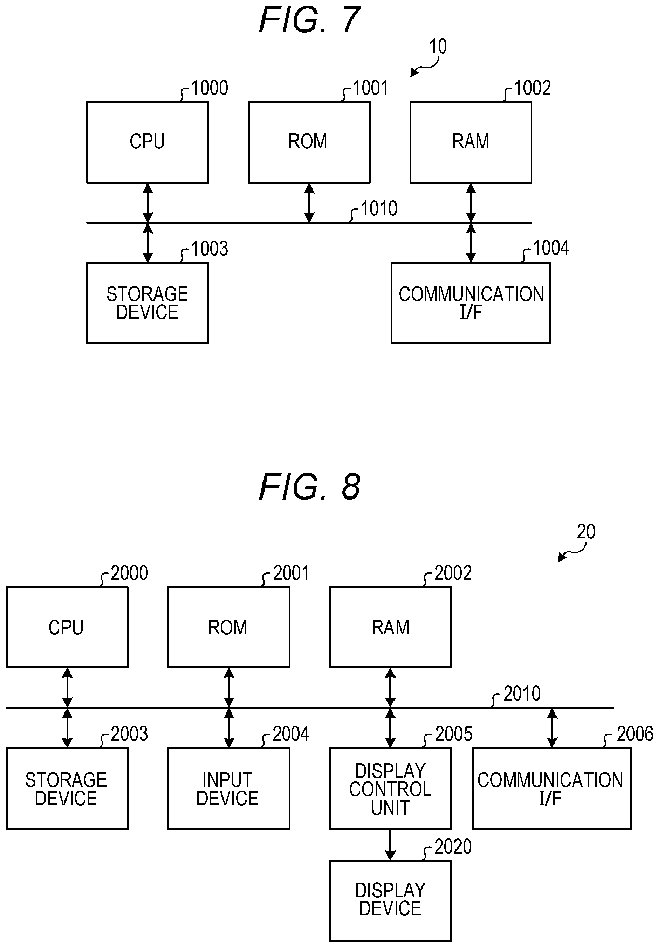

Fig. 7 is a block diagram illustrating the hardware configuration of an example of the insurer server 10 that can be applied to the embodiment. In Fig. 7, the insurer server 10 includes a CPU 1000, a read only memory (ROM) 1001, a random access memory (RAM) 1002, a storage device 1003, and a communication I/F 1004 that are communicably connected to one another by a bus 1010.

The storage device 1003 is a nonvolatile storage medium such as a hard disk drive or a flash memory. The storage device 1003 stores various programs and data for the CPU 1000 to operate.

The CPU 1000 operates according to an information processing program stored in advance in the ROM 1001 and the storage device 1003, and controls the entire operation of this server device 10a. The communication I/F 1004 executes communication with respect to the network 2 under the control of the CPU 1000.

Among the communication unit 100, the control unit 101, the preference matching section 111, the list generation section 112, the candidate list DB 113, the insurance benefit management section 120, the policyholder and insurance data management section 121, and the DB 122 described above, the communication unit 100 and the control unit 101 are implemented by a basic program (for example, an operating system (OS)) of this insurer server 10 operating, the basic program being stored in advance in the storage device 1003, for example, on the CPU 1000. Furthermore, among these, the preference matching section 111, the list generation section 112, the candidate list DB 113, the insurance benefit management section 120, the policyholder and insurance data management section 121, and the DB 122 are implemented by executing an information processing program for server function on the CPU 1000, for example.

The information processing program has a module configuration including, for example, the preference matching section 111, the list generation section 112, the candidate list DB 113, the insurance benefit management section 120, the policyholder and insurance data management section 121, and the DB 122. In actual hardware, by the CPU 1000 reading, from a storage medium such as the storage device 1003, for example, and executing the information processing program, the above-described units are loaded onto a main storage device such as the RAM 1002, and the units are generated on the main storage device.

Fig. 8 is a block diagram illustrating the hardware configuration of an example of the terminal device 20 that can be applied to the embodiment. In Fig. 8, the terminal device 20 includes a CPU 2000, a ROM 2001, a RAM 2002, a storage device 2003, an input device 2004, a display control unit 2005, and a communication I/F 2006 that are communicably connected to one another by a bus 2010. Furthermore, in the example of Fig. 8, the terminal device 20 further includes a display device 2020 connected to the display control unit 2005.

The storage device 2003 is a nonvolatile storage medium such as a hard disk drive or a flash memory. The storage device 2003 stores various programs and data for the CPU 2000 to operate.

The CPU 2000 operates according to a program stored in advance in the ROM 2001 and the storage device 2003, and controls the entire operation of this terminal device 20. Furthermore, the CPU 2000 forms the insurance service app 200 according to an application program stored in advance in the storage device 2003, for example. The communication I/F 2006 executes communication with respect to the network 2 under the control of the CPU 2000.

The input device 2004 generates a control signal in response to a user operation. The generated control signal is passed to the CPU 2000 via the bus 2010. The display control unit 2005 generates a display signal that can be displayed by the display device 2020 on the basis of a display control signal generated by the CPU 2000 according to the program, and outputs this display signal to the display device 2020. As the display device 2020, for example, a display device using a liquid crystal display (LCD) or organic electro-luminescence (EL) can be applied.

Here, for example, the input device 2004 may generate a control signal corresponding to a contact position and be light-permeable, and the input device 2004 and the display device 2020 may be integrally formed to constitute a touchscreen.

Among the insurance service app 200, the communication unit 210, and the control unit 211 described above, the communication unit 210 and the control unit 211 are implemented by a basic program (for example, OS) of this terminal device 20a, for example, operating on the CPU 2000. Furthermore, among them, the insurance service app 200 is implemented by an application program acquired from the network 2, for example, operating on the CPU 2000.

An application program for forming the insurance service app 200 applicable to the embodiment has a module configuration including, for example, the insurance benefit management section 220, the purchase insurance type selection section 221, and the UI section 222. In actual hardware, by the CPU 2000 reading, from a storage medium such as the storage device 2003, for example, and executing the app, the above-described units are loaded onto a main storage device such as the RAM 2002, and the units are generated on the main storage device.

### (2-2. Specific processing according to embodiment)

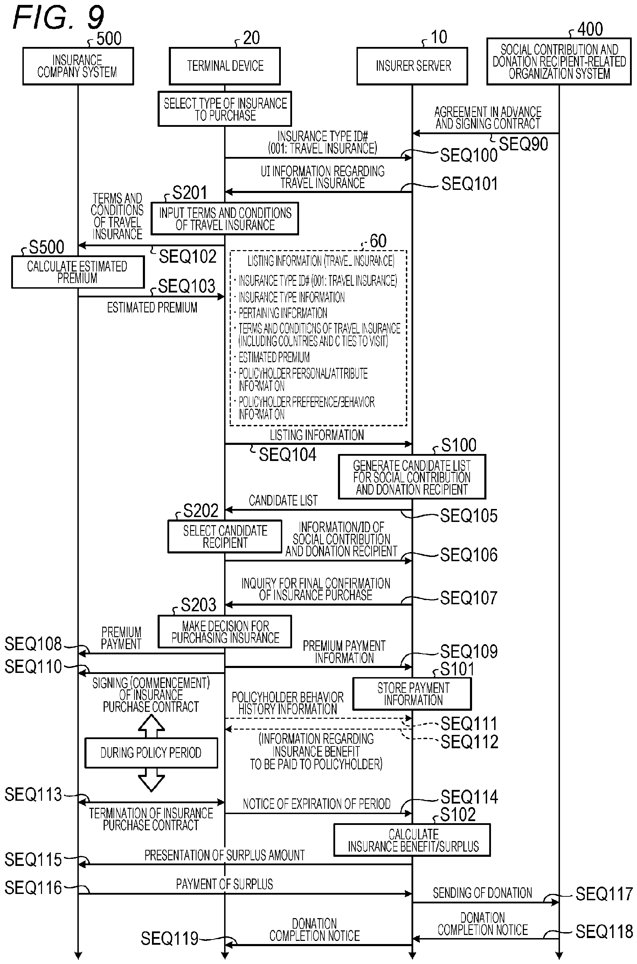

Next, the processing according to the embodiment will be described more specifically. Fig. 9 is a sequence diagram of an example illustrating the processing in the system according to the embodiment. Here, an example in which the user 21 purchases travel insurance for travel will be described.

In Fig. 9, an arrangement regarding sending of donation money is made between the insurer server 10 and the social contribution and donation recipient-related organization system 400, and a contract is signed (SEQ 90) .

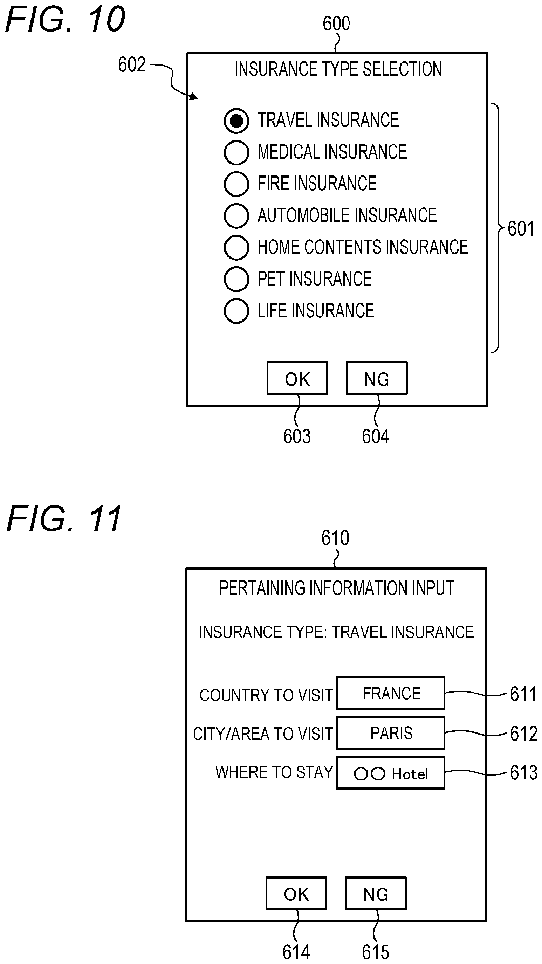

In a case where the user 21 desires to purchase the insurance, the user activates the insurance service app 200 on the terminal device 20, causes an insurance type selection screen to display, and selects an insurance type to purchase (step S200). Fig. 10 is a schematic view illustrating an example of an insurance type selection screen 600 according to the embodiment, displayed on the display device 2020 of the terminal device 20 by the insurance service app 200. Note that in the following, unless otherwise specified, displaying a screen on the display device 2020 of the terminal device 20 will be simply described as displaying a screen on the terminal device 20.

In Fig. 10, on the insurance type selection screen 600, an insurance type list 601 in which insurance types are listed, a radio button group 602 including a plurality of radio buttons, and buttons 603 and 604 are arranged. Here, only one of the plurality of radio buttons included in the radio button group 602 can be designated.

In this example, in the insurance type list 601, a plurality of insurance types such as travel insurance, medical insurance, fire insurance, automobile insurance, home contents insurance, pet insurance, and life insurance is listed and displayed. The user 21 can select the insurance type to purchase by designating a radio button corresponding to a desired insurance type among the plurality of radio buttons included in the radio button group 602. In the example of Fig. 10, "travel insurance" is selected as the insurance type.

The button 603 is a button for holding a selection result of the insurance type by the radio button group 602 in response to the operation and shifting the processing to the next processing. In response to the operation, the button 604 discards the selection result of the insurance type by the radio button group 602, and returns the displayed screen, for example, to a previous screen, for example, a menu screen.

In the terminal device 20, when the button 603 is operated on the insurance type selection screen 600, the insurance service app 200 transmits identification information ID# for identifying the selected insurance type to the insurer server 10 (SEQ 100). Here, the identification information ID# of the travel insurance is "001".

In the insurer server 10, with reference to the policyholder and insurance data DB included in the DB 122 on the basis of the identification information ID# transmitted from the terminal device 20, the policyholder and insurance data management section 121 acquires information regarding the travel insurance associated with the identification information ID#. The policyholder and insurance data management section 121 collects information to be displayed on a condition input screen for the insurance service app 200 to input a condition of travel insurance on the terminal device 20 on the basis of the acquired information. For example, the policyholder and insurance data management section 121 acquires information indicating items of pertaining information related to insurance type ID# from the policyholder and insurance data DB included in the DB 122. The policyholder and insurance data management section 121 can moreover acquire information indicating items for each of the policyholder's personal information, attribute information, preference information, and behavior information corresponding to the insurance type ID# from the policyholder and insurance data DB.

The insurer server 10 transmits the information collected by the policyholder and insurance data management section 121 to the terminal device 20 as UI information for configuring a UI regarding travel insurance (SEQ 101).

In the terminal device 20, when receiving the UI information transmitted from the insurer server 10, the insurance service app 200 displays an input screen for inputting information by the user 21 regarding the travel insurance on the basis of the received UI information (step S201). Here, the input screen includes a condition input screen for inputting a condition of travel insurance to be sent to the insurance company, and a pertaining information input screen for inputting pertaining information pertaining the travel. Here, since the condition input screen is a screen for inputting general conditions regarding travel insurance (travel destination, flight information, duration of stay, and the like), the description will be omitted here.

Fig. 11 is a schematic view illustrating an example of a pertaining information input screen 610 according to the embodiment displayed by the insurance service app 200. In the embodiment, a plurality of pieces of pertaining information can be input for one insurance type. In the example of Fig. 11, on the pertaining information input screen 610, three input regions 611, 612, and 613 for inputting pertaining information are arranged. That is, in the example of Fig. 11, three items of pertaining information are associated with respect to the insurance type "travel insurance".

The input region 611 is a region for inputting pertaining information "country to visit". The input region 612 is a region for inputting pertaining information "city/area to visit". The input region 613 is a region for inputting pertaining information "where to stay". In Fig. 11, as a specific example, "France" is input as the country to visit to the input region 611, "Paris" is input as the city/area to visit to the input region 612, and "oo hotel" is input as the where to stay to the input region 613.

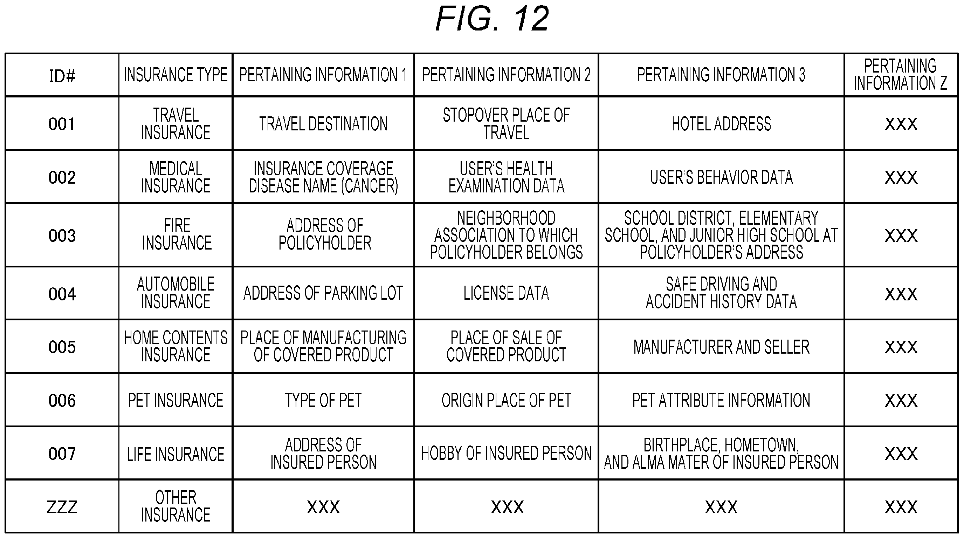

Each piece of pertaining information input to the pertaining information input screen 610 is stored in, for example, the RAM 2002 of the terminal device 20 in association with the insurance type information. Fig. 12 is a schematic view illustrating an example of the structure of data including pertaining information that can be applied to the embodiment. In the example of Fig. 12, the data including the pertaining information has a structure in which one insurance type and one or more pieces of pertaining information are associated with respect to one identification information ID#. The number of pieces of pertaining information associated with one identification information ID# is not limited as long as it is one or more. As the data structure, a structure in which the identification information ID# and each piece of pertaining information have a fixed length, and fixed-length data indicating the number of pieces of pertaining information added to the identification information ID# is arranged immediately after the identification information ID# is conceivable.

In the example of Fig. 12, the identification information ID# "001" is associated with the insurance type "travel insurance", and moreover, is associated with pertaining information 1 "travel destination", pertaining information 2 "stopover place of travel", and pertaining information 3 "hotel address". Note that in the example of Fig. 11, the pertaining information 2 is "city/area to visit".

The identification information ID# "002" is associated with the insurance type "medical insurance", and moreover, is associated with the pertaining information 1 "insurance coverage disease name (cancer)", the pertaining information 2 "user's health examination data", and the pertaining information 3 "user's behavior data". The identification information ID# "003" is associated with the insurance type "fire insurance", and moreover, is associated with the pertaining information 1 "address of policyholder", the pertaining information 2 "neighborhood association to which policyholder belongs", and the pertaining information 3 "school district, elementary school, and junior high school at policyholder's address". In this case, the pertaining information 3 includes three pieces of information of the school district, the elementary school name, and the junior high school name.

The identification information ID# "004" is associated with the insurance type "automobile insurance", and moreover, is associated with the pertaining information 1 "address of parking lot", the pertaining information 2 "license data", and the pertaining information 3 "safe driving and accident history data". In this case, there is a possibility that the pertaining information 3 includes a plurality of pieces of information as history data. The identification information ID# "005" is associated with the insurance type "home contents insurance", and moreover, is associated with the pertaining information 1 "place of manufacturing of covered product", the pertaining information 2 "place of sale of covered product", and the pertaining information 3 "manufacturer and seller".

The identification information ID# "006" is associated with the insurance type "pet insurance", and moreover, is associated with the pertaining information 1 "type of pet", the pertaining information 2 "origin place of pet", and the pertaining information 3 "pet attribute information". Furthermore, the identification information ID# "007" is associated with the insurance type "life insurance", and moreover, is associated with the pertaining information 1 "address of insured person", the pertaining information 2 "hobby of insured person", and the pertaining information 3 "birthplace, hometown, and alma mater of insured person".

Note that the example of Fig. 12 is for explanation, and the insurance type is not limited to seven types. Furthermore, the number of pieces of pertaining information associated with each identification information ID# is not limited to three, and for example, the number of pieces of pertaining information may be different for each insurance type.

Returning to the explanation of Fig. 11, moreover, buttons 614 and 615 are arranged on the pertaining information input screen 610. The button 614 is a button for holding pertaining information input to each input region 611 to 613 in response to the operation and shifting the processing to the next processing. In response to the operation, the button 615 discards the pertaining information input in each input region 611 to 613, and returns the displayed screen, for example, to a previous screen, for example, a menu screen.

In the terminal device 20, the insurance service app 200 transmits, to the insurance company system 500, information indicating the condition of the travel insurance input to the condition input screen in step S201, in response to an operation on the button 614 of the pertaining information input screen 610, for example (SEQ 102). The insurance company system 500 calculates an estimated premium on the basis of the information indicating the condition of travel insurance transmitted from the terminal device 20 (step S500), and transmits information indicating the calculated estimated premium to the terminal device 20 (SEQ 103).

In the terminal device 20, upon receiving the information indicating the estimated premium from the insurance company system 500, the insurance service app 200 creates listing information 60 for creating the candidate list 30 on the basis of the received estimated premium, the insurance type selected in step S200, and each piece of information input in step S201. The listing information 60 includes, for example, the insurance type ID# (in this example, ID# = 001), the insurance type information (travel insurance), the pertaining information (country to visit, city/area to visit, and where to stay), the travel insurance conditions (including country to visit and city to visit), the estimated premium, the policyholder's personal information and attribute information, and the policyholder's preference information and behavior information.

The insurance service app 200 transmits the created listing information 60 to the insurer server 10 (SEQ 104). In the insurer server 10, the list generation section 112 generates the candidate list 30 on the basis of the listing information 60 transmitted from the terminal device 20 and the candidates of the social contribution and donation recipients stored in the candidate list DB 113 (step S100).

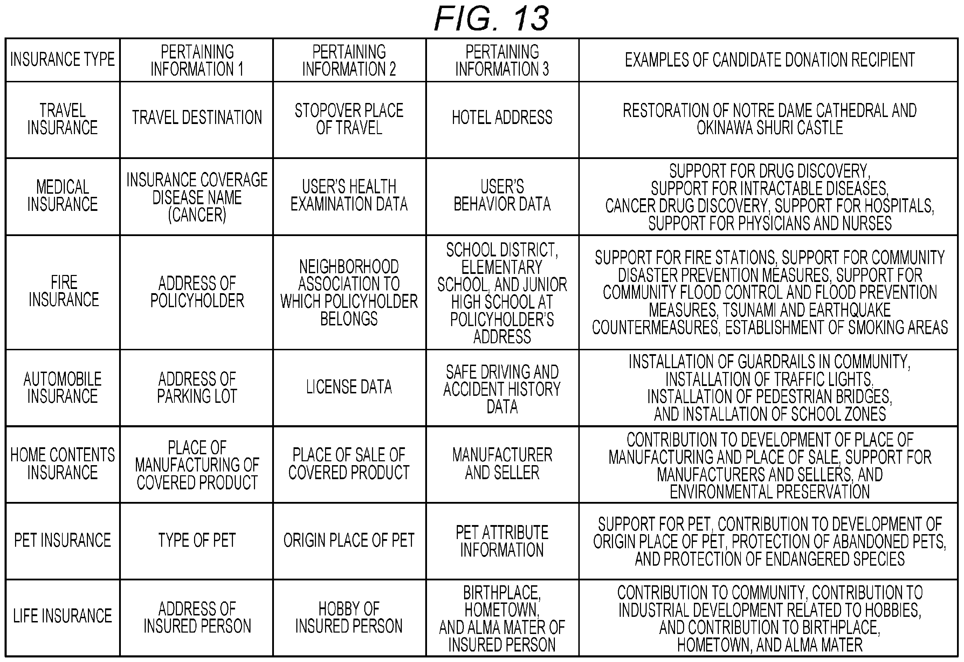

Fig. 13 is a schematic view illustrating an example of donation recipient candidates included in the candidate list 30 according to the embodiment. In Fig. 13, "insurance type", "pertaining information 1", "pertaining information 2", and "pertaining information 3" are common to those in Fig. 12 described above.

In the example of Fig. 13, in a case where the insurance type is "travel insurance" and the pertaining information 1 to 3 are "travel destination", "stopover place of travel", and "hotel address", respectively, it is conceivable to set restoration projects of historical buildings such as "restoration of Notre Dame Cathedral" and "restoration of Okinawa Shuri Castle" as the candidate for donation recipients. In a case where the insurance type is "medical insurance" and the pertaining information 1 to 3 are "insurance coverage disease name (cancer)", "user's health examination data", and "user's behavior data", respectively, it is conceivable to set medical supports such as "support for drug discovery", "support for intractable diseases", "cancer drug discovery", "support for hospitals", and "support for physicians and nurses" as the candidate for donation recipients.

In a case where the insurance type is "fire insurance" and the pertaining information 1 to 3 are "address of policyholder", "neighborhood association to which policyholder belongs", and "school district, elementary school, and junior high school at policyholder's address", respectively, it is conceivable to set supports regarding regional preservation such as "support for fire stations", "support for community disaster prevention measures", "support for community flood control and flood prevention measures", "tsunami and earthquake countermeasures", "establishment of smoking areas" as the candidate for donation recipients. In a case where the insurance type is "automobile insurance" and the pertaining information 1 to 3 are "address of parking lot", "license data", and "safe driving and accident history data", respectively, it is conceivable to set items regarding facilities regarding traffic safety such as "installation of guardrails in community", "installation of traffic lights", "installation of pedestrian bridges", and "installation of school zones" as the candidate for donation recipients.

In a case where the insurance type is "home contents insurance" and the pertaining information 1 to 3 are "place of manufacturing of covered product", "place of sale of covered product", and "manufacturer and seller", respectively, it is conceivable to set items regarding manufacturing of home contents such as "contribution to development of place of manufacturing and sales price", "support for manufacturers and sellers", and "environmental preservation" as the candidate for donation recipients. In a case where the insurance type is "pet insurance" and the pertaining information 1 to 3 are "type of pet", "origin place of pet", and "pet attribute information", respectively, it is conceivable to set items regarding protection and breeding of pets and wild animals such as "support for pet", "contribution to development of origin place of pet", "protection of abandoned pets", and "protection of endangered species" as the candidate for donation recipients.

Furthermore, in a case where the insurance type is "life insurance" and the pertaining information 1 to 3 are "address of insured person", "hobby of insured person", and "birthplace, hometown, and alma mater of insured person", respectively, it is conceivable to set items regarding raison d'etre and living environment such as "contribution to community", "contribution to industrial development related to hobbies", and "contribution to birthplace, hometown, and alma mater" as the candidate for donation recipients.

Note that the example of Fig. 13 is for explanation, and is not limited to this example.

The method of generating the candidate list 30 by the list generation section 112 is not particularly limited, but it includes a method of automatically generating with reference to a table or the like, for example, on the basis of pertaining information, and a method of automatically generating on the basis of preference information or attribute information of the user 21 who wishes to purchase the insurance.

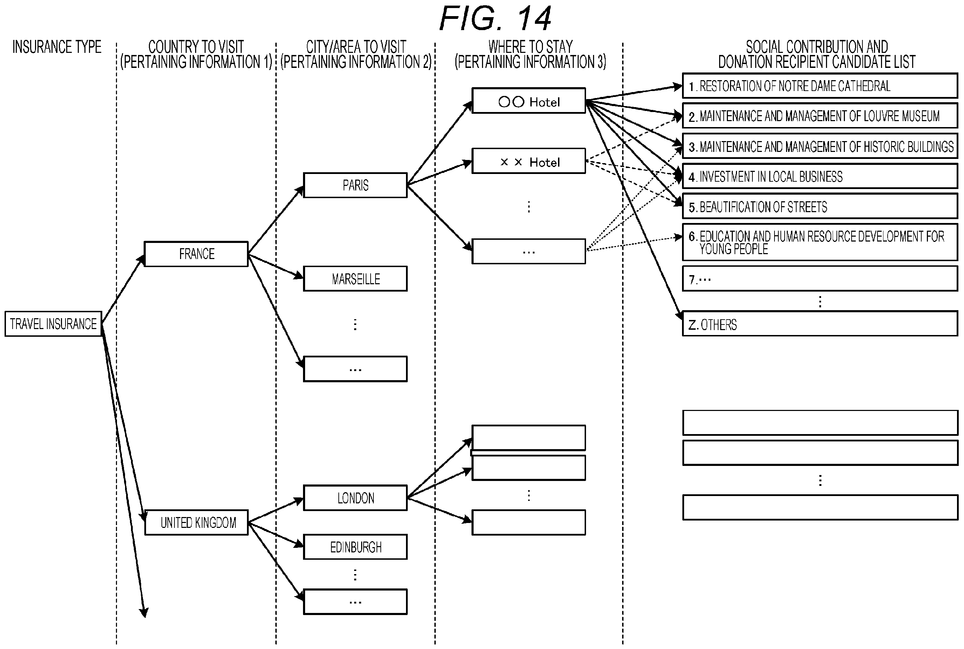

Fig. 14 is a view schematically illustrating the processing of automatically generating the candidate list 30 on the basis of pertaining information that can be applied to the embodiment In the example of Fig. 14, the list generation section 112 makes items of pertaining information fixed in the insurance type, and narrows down the information in the order of, for example, the pertaining information 1, the pertaining information 2, the pertaining information 3, .... In the example of Fig. 14, the pertaining information 3 becomes final information, and each item of a master of candidates for the social contribution and donation recipient is associated for each piece of information (oo hotel, xx hotel, ...) selectable as the pertaining information 3.

In the example of Fig. 14, "1. Restoration of Notre Dame Cathedral", "2. Maintenance and management of Louvre Museum", "3. Maintenance and control of historic buildings", "4. Investment in local business", "5. Beautification of streets", and "Z. Others" are associated with the pertaining information 3 "oo hotel" as the candidates for social contribution and donation recipients. Therefore, in a case where the pertaining information 1 to 3 are "France", "Paris", and "oo hotel", respectively, the social contribution and donation recipients included in the candidate list 30 become "1. Restoration of Notre Dame Cathedral", "2. Maintenance and management of Louvre Museum", "3. Maintenance and control of historic buildings", "4. Investment in local business", "5. Beautification of streets", and "Z. Others".

Furthermore, the pertaining information 3 "xx hotel" is associated with "2. Maintenance and management of Louvre Museum", "4. Investment in local business", and "5. Beautification of streets". Therefore, in a case where the pertaining information 1 to 3 are "France", "Paris", and "xx hotel", respectively, the social contribution and donation recipients included in the candidate list 30 become "2. Maintenance and management of Louvre Museum", "4. Investment in local business", and "5. Beautification of streets".

Not limited to this, the user 21 may create the candidate list 30. In this case, in the terminal device 20, a method in which the insurance service app 200 acquires the master of the candidate list 30, for example, from the insurer server 10 and displays a list, and the user 21 creates the candidate list 30 from the list display is conceivable. The candidate list 30 created by the user 21 can be saved in, for example, the terminal device 20 or the like, and made available at another opportunity.

Moreover, the list generation section 112 can also generate the candidate list 30 on the basis of a model generated by machine learning. In this case, for example, the list generation section 112 prepares in advance a set of each pertaining information (pertaining information 1 to 3) and corresponding social contribution and donation recipient, divides this set into a set of learning data and a set of evaluation data (correct answer data), and evaluates, by evaluation data, the model generated by machine learning based on the learning data. The list generation section 112 generates a calculation model for calculating the social contribution and donation recipient from each pertaining information on the basis of the evaluation result.

The list generation section 112 applies, to the generated calculation model, each piece of pertaining information included in the listing information transmitted from the terminal device 20 in SEQ 104, and calculates social contribution and donation recipient. At this time, the list generation section 112 can output a plurality of social contribution and donation recipients according to the certainty of the calculation result by the calculation model. The list generation section 112 generates the candidate list 30 using the plurality of social contribution and donation recipients.

Furthermore, the list generation section 112 can also generate the candidate list 30 on the basis of information that can be acquired on the Internet, for example, ranking information of tourist attractions and a personal post on a social networking service (SNS). The list generation section 112 collects, aggregates, and analyzes, by a predetermined method, these pieces of information from the Internet, for example, and ranks tourist attractions and tourist spots. Then, the list generation section 112 generates the candidate list 30 by using the social contribution and donation recipients related to the tourist attractions and tourist spots having predetermined or higher ranking.

In the insurer server 10, the list generation section 112 transmits the generated candidate list 30 to the terminal device 20 (SEQ 105). In the terminal device 20, the insurance service app 200 displays the social contribution and donation recipient selection screen for selecting a desired social contribution and donation recipient from the candidate list 30 transmitted from the insurer server 10, and prompts the user 21 to select the social contribution and donation recipient (step S202).

Not limited to this, it is possible to generate the candidate list 30 by further using preference of the user 21. For example, in the insurer server 10, in a case where preference information regarding the preference of the user 21 is input in the condition input of the travel insurance in step S201, it is conceivable that the preference matching section 111 performs matching between the social contribution and donation recipient and the preference information and preferentially includes, in the candidate list 30, the social contribution and donation recipient matching the preference information at a high degree. As an example, in a case where "painting" or "fine art" is input as the preference information of the user 21, social contribution and donation recipients (for example, museum) related to these "painting" or "fine art" are preferentially included in the candidate list 30.

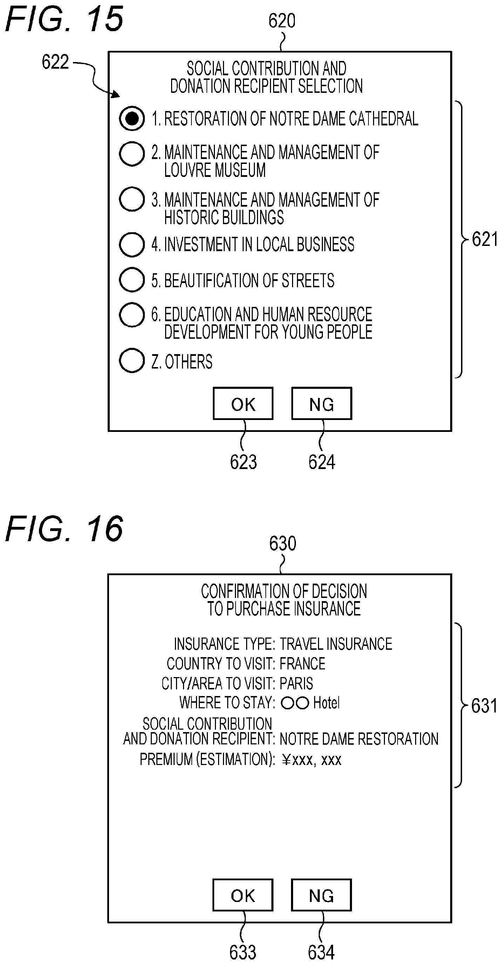

Fig. 15 is a schematic view illustrating an example of a social contribution and donation recipient selection screen 620 according to the embodiment displayed by the insurance service app 200. In Fig. 15, on the social contribution and donation recipient selection screen 620, a display region 621 in which each social contribution and donation recipient included in the candidate list 30 is displayed, a radio button group 622 including a plurality of radio buttons, and buttons 623 and 624 are arranged.

In this example, "1. Restoration of Notre Dame Cathedral", "2. Maintenance and management of Louvre Museum", "3. Maintenance and control of historic buildings", "4. Investment in local business", "5. Beautification of streets", and "6. Education and human resource development for young people" are displayed in a list with respect to the display region 621 as candidates for social contribution and donation recipients. The user 21 can select the social contribution and donation recipient to make a donation by designating a radio button corresponding to a desired social contribution and donation recipient among the plurality of radio buttons included in the radio button group 622. In the example of Fig. 15, "1. Restoration of Notre Dame Cathedral" is selected as the social contribution and donation recipient.

The button 623 is a button for transmitting, to the insurer server 10, the selection result of the social contribution and donation recipient by the radio button group 622 in response to an operation, and shifting the processing to the next processing. In response to the operation, the button 624 discards the selection result of the social contribution and donation recipient by the radio button group 622, and returns the displayed screen, for example, to a previous screen, for example, a menu screen.

In the terminal device 20, when the button 623 is operated on the social contribution and donation recipient selection screen 620, the insurance service app 200 transmits identification information (ID) for identifying the selected social contribution and donation recipient to the insurer server 10 (SEQ 106).

Upon receiving the information on the social contribution and donation recipient selected from the terminal device 20, the insurer server 10 holds the information and transmits an inquiry of final confirmation of insurance purchase to the terminal device 20 (SEQ 107). In the terminal device 20, the insurance service app 200 displays a decision confirmation screen for determining a decision to purchase the insurance in response to this inquiry (step S203).

Fig. 16 is a schematic view illustrating an example of a decision confirmation screen 630 according to the embodiment displayed by the insurance service app 200 in the terminal device 20. In Fig. 16, on the decision confirmation screen 630, a display region 631 and buttons 633 and 634 are arranged.

The display region 631 is a region in which information regarding the insurance that the user 21 wishes to purchase is displayed. In the example of Fig. 16, the insurance type selected in step S200, the pertaining information input in step S201, the social contribution and donation recipient selected in step S202, and the estimated amount of the premium transmitted from the insurance company system 500 in SEQ 103 are displayed with respect to the display region 631.

In response to the operation, the button 633 determines purchase of insurance with the content displayed in the display region 631. On the other hand, in response to the operation, the button 634 suspends or cancels the purchase of the insurance with the content displayed in the display region 631, and returns the displayed screen, for example, to a previous screen, for example, a menu screen. In response to the operations on these buttons 633 and 634, the decision whether or not the user 21 purchases the insurance is confirmed.

In the terminal device 20, when the button 633 is operated on the decision confirmation screen 630, the insurance service app 200 notifies the insurance company system 500 of payment of the premium (SEQ 108), and transmits, to the insurer server 10, premium payment information indicating that the premium has been paid (SEQ 109). The insurer server 10 stores the premium payment information transmitted from the terminal device 20 (step S101).

Note that after the insurance company system 500 is notified of the payment of the premium in SEQ 108, the premium is paid from the terminal device 20 (user 21) to the insurance company system 500 by a method defined by the insurance company system 500.

When the payment from the terminal device 20 to the insurance company system 500 is completed, an insurance purchase contract is signed between the terminal device 20 (user 21) and the insurance company system 500 (insurance company) (SEQ 110). Note that here, after payment of the premium of the insurance company system 500 from the terminal device 20 is performed, the insurance purchase contract is signed between the terminal device 20 and the insurance company system 500, but this is not limited to this example. For example, the insurance purchase contract may be signed simultaneously with payment of the premium of the insurance company system 500 from the terminal device 20, or the premium may be paid after the insurance purchase contract is signed.

When the insurance contract is signed between the terminal device 20 (user 21) and the insurance company system 500 (insurance company), the insurance period is started.

Note that during the insurance period, in the terminal device 20, for example, the insurance service app 200 can transmit the behavior history of the policyholder (user 21) to the insurer server 10 (SEQ 111). The insurer server 10 can calculate an insurance benefit paid from the insurance company to the user 21 on the basis of the behavior history transmitted from the terminal device 20 in the insurance benefit management section 120, for example, and transmit information on the calculated insurance benefit to the terminal device 20 (SEQ 112).

When the insurance purchase contract ends between the terminal device 20 (user 21) and the insurance company system 500 (insurance company) (SEQ 113), the terminal device 20 is notified of that effect (SEQ 114). In the terminal device 20, the insurance service app 200 transmits a notification indicating the expiration of the insurance period to the insurer server 10 in response to the end notification of the insurance purchase contract (SEQ 114).

When the insurer server 10 receives the notification of the insurance period expiration from the terminal device 20, the insurance benefit management section 120 calculates the insurance benefit and the surplus of the premium according to a predetermined rule on the basis of the payment information by the terminal device 20 stored in step S101. For example, the insurance benefit management section 120 calculates the amount of the surplus with respect to the premium paid by the user 21 to the insurance company system 500 according to the insurance benefit amount paid by the insurance company system 500 to the user 21 (step S102). At this time, it is preferable that the insurance benefit management section 120 determines the upper limit of the surplus with respect to the premium so that the profit of the insurance company is secured even in a case where no insurance benefit is paid at all from the insurance company system 500 to the user 21.

The insurer server 10 presents the surplus amount calculated in step S102 to the insurance company system 500 (SEQ 115). The insurance company system 500 pays the surplus indicated in the presented surplus amount to the insurer server 10 (SEQ 116). This surplus is to be paid from the premium paid by the user 21 in SEQ 108.

Upon receiving the payment of the surplus from the insurance company system 500, the insurer server 10 transmits the surplus to the social contribution and donation recipient-related organization system 400 corresponding to the social contribution and donation recipient as a donation to the social contribution and donation recipient received from the terminal device 20 in SEQ 106 (SEQ 117). Upon confirming the sending of the donation from the insurer server 10, the social contribution and donation recipient-related organization system 400 transmits a receipt confirmation of the donation to the insurer server 10 as a donation completion notification (SEQ 118).

The insurer server 10 transmits, to the terminal device 20, the donation completion notification transmitted from the social contribution and donation recipient-related organization system 400 in SEQ 118 (SEQ 119). In the terminal device 20, upon receiving the donation completion notification, the insurance service app 200 displays that effect. Therefore, the user 21 of the terminal device 20 can learn that donation to the social contribution and donation recipient selected by the user himself/herself has been made from the premium paid by the user himself/herself, and can accordingly get a feeling of satisfaction.

As explained above, in the system according to the embodiment, since the candidate list 30 of the social contribution and donation recipients is dynamically generated on the basis of the pertaining information regarding the type of insurance that the user 21 purchases, the items on the candidate list 30 can be diversified. Furthermore, since the user 21 can make a donation to the social contribution and donation recipient selected by the user himself/herself from the candidate list 30, it is possible to increase motivation to purchase the insurance. Therefore, it is also possible to differentiate the insurance company, leading to improvement in competitiveness of the insurance company.

### (3. Modification of embodiment)

Next, a modification of the embodiment will be described. In the above-described embodiment, it has been explained that the insurance service app 200, which executes the processing according to the embodiment, is installed on the terminal device 20 in the terminal device of the user 21, but this is not limited to this example. In the modification of the embodiment, the processing according to the above-described embodiment is implemented by a web app operating on the insurer server 10.

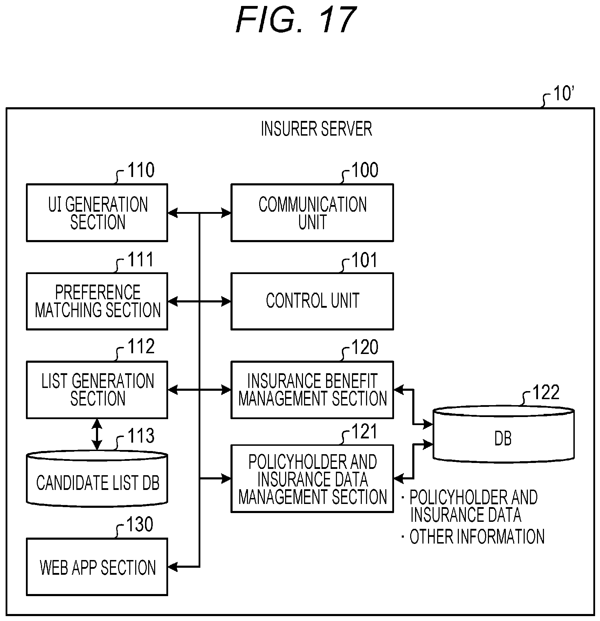

Fig. 17 is a functional block diagram of an example for explaining the function of an insurer server according to the modification of the embodiment. In Fig. 17, an insurer server 10' is the insurer server 10 described with reference to Fig. 3 added with a UI generation section 110 and a web app section 130. In the insurer server 10', the other sections have the same functions as the corresponding sections of the insurer server 10 of Fig. 3, and thus, the explanation is omitted here.

In Fig. 17, the web app section 130 is described on the basis of, for example, HyperText Markup Language (HTML), and stores a web app that is read into a web browser installed in the terminal device 20 and operates on the web browser. Furthermore, the UI generation section 110 generates a UI configured in the terminal device 20 by the web app. For example, the UI generation section 110 causes the terminal device 20 to display each screen, by the web app, such as the insurance type selection screen 600, the pertaining information input screen 610, the social contribution and donation recipient selection screen 620, and the decision confirmation screen 630 described above, and generates UI control information for receiving input to each screen.

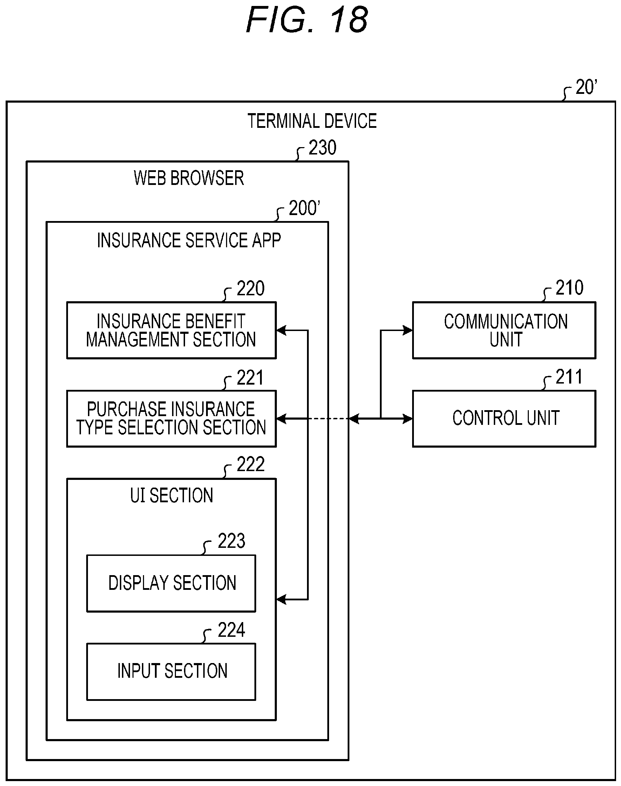

Fig. 18 is a functional block diagram of an example for explaining the function of a terminal device according to the modification of the embodiment. In Fig. 18, a terminal device 20' includes a web browser 230, the communication unit 210, and the control unit 211. Among them, the communication unit 210 and the control unit 211 are common to the communication unit 210 and the control unit 211 in the terminal device 20 of Fig. 4, and thus, the description will be omitted here.

The web browser 230 can read an HTML file described using, for example, HTML on the network 2 and execute generation of a display control signal, input control, communication control, and the like according to the description in the file.

An insurance service app 200' is read by the web browser 230 from the web app section 130 of the insurer server 10' described above. Upon reading the insurance service app 200' as a web app from the web app section 130 of the insurer server 10', the web browser 230 generates, in the web browser 230, the insurance benefit management section 220, the purchase insurance type selection section 221, and the UI section 222. Furthermore, the UI section 222 includes the display section 223 and the input section 224. Since the insurance benefit management section 220, the purchase insurance type selection section 221, and the UI section 222 included in the insurance service app 200' can implement functions substantially equivalent to those of the insurance benefit management section 220, the purchase insurance type selection section 221, and the UI section 222 in the terminal device 20 described with reference to Fig. 4, the description will be omitted here.

Since the processing according to the modification of the embodiment is similar to the processing explained with reference to Figs. 9 to 16 in the above-described embodiment, the description will be omitted here.

Thus, by executing the processing according to the present disclosure by the web app read from the insurer server 10' in the terminal device 20 of the user 21, it is possible to improve maintainability of functions and the like.

### (4. Further modification of embodiment)

Next, a further modification of the embodiment will be described. In the above-described embodiment, the candidate list 30 of the social contribution and donation recipient is presented to the terminal device 20 before signing of the insurance contract with the insurance company, but this is not limited to this example, and the candidate list 30 may be presented to the terminal device 20 at a timing after the expiration of the contract with the insurance company or close to the expiration. For example, in the case of travel insurance, the candidate list 30 may be presented on the way home (for example, during a flight or on a return train). In this case, the user 21 can examine social contribution and donation recipients while recalling the visited destination during travel. Furthermore, travel destination history information can be accumulated in the insurer server 10 in association with information for identifying the user 21, and a social contribution and donation recipient can be selected by looking back on a previously visited travel destination or city.

In the above, the fact that the donation has been sent to the donation recipient is transmitted to the terminal device 20 of the user 21, but this is not limited to this example, and it is preferable to feed back, for example, what the donation has been actually used for. For example, it is conceivable that the social contribution and donation recipient-related organization system 400 that has received the donation transmits a donation completion notification added with information indicating the use of the donation. As an example, in a case where the social contribution and donation recipient-related organization system 400 is of an organization related to restoration of Notre Dame Cathedral, it is conceivable to transmit photographic image data indicating a restoration status as information indicating the use of the donation.

In the above, the order of each social contribution and donation recipient included in the candidate list 30 when the candidate list 30 is displayed on the terminal device 20 is not mentioned. However, the candidate list 30 may be created in this order such that, for example, a social theme or a donation recipient having a high degree of social contribution is ranked high (or automatically selected).

Furthermore, in the above, the donation is transmitted to the social contribution and donation recipient for each insurance contract, but this is not limited to this example. For example, it is possible to save the surplus generated by the insurance contract, and bring together and transmit, to the donation recipient, the saved surplus at a certain timing. For example, in a case where the insurance type is travel insurance, it is conceivable to have a case where the donation recipient is not set for travel to a certain destination, but desired to bring together and use for travel to another destination. In this case, it is preferable to set an upper limit of the accumulation period of the surplus.

In an existing frequent flyer program in which points (miles) are saved according to the flight distance, it is possible to donate the saved miles as social contribution. However, in the frequent flyer program, the donation recipient is not linked to the travel destination. On the other hand, in the system according to the embodiment, it is possible to execute social contribution and donation linked to the travel destination.

Furthermore, in a case where the insurance type is travel insurance, there can be a case where a desired donation recipient changes before and after go traveling. For example, some users 21 select the travel destination on the basis of a social problem.

Moreover, in the embodiment, it is assumed that the donation is made from the surplus of the premium paid at the time of insurance purchase, but this is not limited to this example. That is, a candidate destination may be selected by one's own will from a presented list of social contribution and donation recipients to donate.

Furthermore, in the above description, it has been described that the related organization that runs the social contribution and donation recipient-related organization system 400 is mainly engaged in public and non-profitable activities, but this is not limited to this example. The related organization may be an organization that practices crowdfunding or some investment.

Note that the effects described in the present description are merely exemplary and not limited, and other effects may be present.

Note that the present technology can also have the following configurations.
(1) A server device including:
   a generation section that acquires insurance type information indicating a type of insurance that a user purchases and pertaining information related to the insurance, and generates a candidate list of donation recipients including information regarding one or more donation recipients on the basis of the insurance type information and the pertaining information that have been acquired.
(2) The server device according to the (1), in which
   the donation recipient is a public and non-profitable organization.
(3) The server device according to the (1) or (2), in which
   the generation section
   generates the candidate list by further using preference information indicating preference of the user.
(4) The server device according to any of the (1) to (3), in which
   the generation section
   generates the candidate list by further using attribute information indicating an attribute of the user.
(5) The server device according to any of the (1) to (4), in which
   the generation section
   generates the candidate list by further using information transmitted from an individual to an Internet.
(6) The server device according to any of the (1) to (5), in which
   the generation section
   generates the candidate list on the basis of a model created by machine learning using the pertaining information as learning data and information regarding the donation recipient as evaluation data.
(7) The server device according to any of the (1) to (6), further including:
   an insurance information accumulation section that accumulates at least insurance type information indicating a type of the insurance purchased by the user and the pertaining information related to the insurance, in which
   the generation section
   generates the candidate list on the basis of the insurance type information and the pertaining information accumulated in an insurance information accumulation section.
(8) The server device according to any of the (1) to (7), further including:
   an insurance information management section that manages premium information indicating a premium to be paid by the user for the insurance, in which
   the insurance information management section
   sets a part of the premium to a donation money to be donated to the donation recipient indicated by information regarding the donation recipient on the basis of the premium information.
(9) The server device according to the (8), further including:
   a donation recipient information management section that manages information regarding the donation recipient, in which
   the donation recipient information management section
   notifies the user of execution of the donation to the donation recipient, in a case where donation is executed to the donation recipient indicated by information regarding the donation recipient selected from the candidate list generated on the basis of the insurance type information and the pertaining information corresponding to the user.
(10) The server device according to any of the (1) to (9), further including:
   a web app storage section that stores a web app to be read via a network by a browser application installed in a terminal device, in which
   by being executed on the browser application, the web app causes
   a screen of the terminal device
   to display a first input region for inputting the insurance type,
   to display a second input region for inputting pertaining information on an item corresponding to the insurance type having been input, in response to input of the insurance type to the first input region, and
   to display a candidate list of donation recipients including information regarding one or more donation recipients, the candidate list having been transmitted from the server device according to insurance type information indicating the insurance type input to the first input region and the pertaining information input to the second input region, the insurance type information and the pertaining information having been transmitted to the server device by a communication unit.
(11) A terminal device including:
   a communication unit that communicates with a server device; and
   a display control unit that controls display of a screen with respect to a display section, in which
   the display control unit causes the screen
   to display a first input region for inputting an insurance type,
   to display a second input region for inputting pertaining information on an item corresponding to the insurance type having been input, in response to input of the insurance type to the first input region, and
   to display a candidate list of donation recipients including information regarding one or more donation recipients, the candidate list having been transmitted from the server device according to insurance type information indicating the insurance type input to the first input region and the pertaining information input to the second input region, the insurance type information and the pertaining information having been transmitted to the server device by the communication unit.
(12) The terminal device according to the (11), in which
   the communication unit
   transmits, to the server device, the donation information designated according to the candidate list displayed on the screen, and receives notification of execution of a donation to the donation recipient transmitted from the server in response to transmission of information regarding the donation recipient.
(13) The terminal device according to the (11) or (12), in which
   at least the display control unit of the communication unit and the display control unit
   is configured by a processor executing, on the terminal device, an application program received via a network and installed in the terminal device.
(14) The terminal device according to the (11) or (12), in which
   a browser application is installed, and
   at least the display control unit of the communication unit and the display control unit is configured by a web program operating on the browser application, the web program having been read from the server device via a network.
(15) An information processing program for causing a computer to execute
   a communication step of communicating with a server device, and
   a display control step of controlling display of a screen with respect to a display section, in which
   the display control step causes the screen
   to display a first input region for inputting an insurance type,
   to display a second input region for inputting pertaining information on an item corresponding to the insurance type having been input, in response to input of the insurance type to the first input region, and
   to display a candidate list of donation recipients including information regarding one or more donation recipients, the candidate list having been transmitted from the server device according to insurance type information indicating the insurance type input to the first input region and the pertaining information input to the second input region, the insurance type information and the pertaining information having been transmitted to the server device by the communication step.
(16) An information processing method including:
   an acquisition step of acquiring insurance type information indicating a type of insurance that a user purchases and pertaining information related to the insurance, and
   a generation step of generating a candidate list of donation recipients including information regarding one or more donation recipients on the basis of the insurance type information and the pertaining information that have been acquired,
   the steps being executed by a processor.

### REFERENCE SIGNS LIST

- 10, 10': Insurer server
- 20, 20': Terminal device
- 30: Candidate list
- 200, 200': Insurance service app
- 111: Preference matching section
- 112: List generation section
- 113: Candidate list DB
- 121: Policyholder and insurance data management section
- 220: Insurance benefit management section
- 221: Purchase insurance type selection section
- 222: UI section
- 600: Insurance type selection screen
- 610: Pertaining information input screen
- 620: Social contribution and donation recipient selection screen
- 630: Decision confirmation screen

## Claims

1. A server device comprising:
a generation section that acquires insurance type information indicating a type of insurance that a user purchases and pertaining information related to the insurance, and generates a candidate list of donation recipients including information regarding one or more donation recipients on a basis of the insurance type information and the pertaining information that have been acquired.

2. The server device according to claim 1, wherein
the donation recipient is a public and non-profitable organization.

3. The server device according to claim 1, wherein
the generation section
generates the candidate list by further using preference information indicating preference of the user.

4. The server device according to claim 1, wherein
the generation section
generates the candidate list by further using attribute information indicating an attribute of the user.

5. The server device according to claim 1, wherein
the generation section
generates the candidate list by further using information transmitted from an individual to an Internet.

6. The server device according to claim 1, wherein
the generation section
generates the candidate list on a basis of a model created by machine learning using the pertaining information as learning data and information regarding the donation recipient as evaluation data.

7. The server device according to claim 1, further comprising:
an insurance information accumulation section that accumulates at least insurance type information indicating a type of the insurance purchased by the user and the pertaining information related to the insurance, wherein
the generation section
generates the candidate list on a basis of the insurance type information and the pertaining information accumulated in an insurance information accumulation section.

8. The server device according to claim 1, further comprising:
an insurance information management section that manages premium information indicating a premium to be paid by the user for the insurance, wherein
the insurance information management section
sets a part of the premium to a donation money to be donated to the donation recipient indicated by information regarding the donation recipient on a basis of the premium information.

9. The server device according to claim 8, further comprising:
a donation recipient information management section that manages information regarding the donation recipient, wherein
the donation recipient information management section
notifies the user of execution of the donation to the donation recipient, in a case where donation is executed to the donation recipient indicated by information regarding the donation recipient selected from the candidate list generated on a basis of the insurance type information and the pertaining information corresponding to the user.

10. The server device according to claim 1, further comprising:
a web app storage section that stores a web app to be read via a network by a browser application installed in a terminal device, wherein
by being executed on the browser application, the web app causes
a screen of the terminal device
to display a first input region for inputting the insurance type information,
to display a second input region for inputting pertaining information on an item corresponding to the insurance type information having been input, in response to input of the insurance type information to the first input region, and
to display a candidate list of donation recipients including information regarding one or more donation recipients, the candidate list having been transmitted from the server device according to the insurance type information input to the first input region and the pertaining information input to the second input region, the insurance type information and the pertaining information having been transmitted to the server device by a communication unit.

11. A terminal device comprising:
a communication unit that communicates with a server device; and
a display control unit that controls display of a screen with respect to a display section, wherein
the display control unit causes the screen
to display a first input region for inputting an insurance type,
to display a second input region for inputting pertaining information on an item corresponding to the insurance type having been input, in response to an input of the insurance type to the first input region, and
to display a candidate list of donation recipients including information regarding one or more donation recipients, the candidate list having been transmitted from the server device according to insurance type information indicating the insurance type input to the first input region and the pertaining information input to the second input region, the insurance type information and the pertaining information having been transmitted to the server device by the communication unit.

12. The terminal device according to claim 11, wherein
the communication unit
transmits, to the server device, information regarding the donation recipient of the donation recipient designated according to the candidate list displayed on the screen, and receives notification of execution of a donation to the donation recipient transmitted from the server device in response to transmission of information regarding the donation recipient.

13. The terminal device according to claim 11, wherein
at least the display control unit of the communication unit and the display control unit
is configured by a processor executing, on the terminal device, an application program received via a network and installed in the terminal device.

14. The terminal device according to claim 11, wherein
a browser application is installed, and
at least the display control unit of the communication unit and the display control unit is configured by a web program operating on the browser application, the web program having been read from the server device via a network.

15. An information processing program for causing a computer to execute
a communication step of communicating with a server device, and
a display control step of controlling display of a screen with respect to a display section, wherein
the display control step causes the screen
to display a first input region for inputting an insurance type,
to display a second input region for inputting pertaining information on an item corresponding to the insurance type having been input, in response to input of the insurance type to the first input region, and
to display a candidate list of donation recipients including information regarding one or more donation recipients, the candidate list having been transmitted from the server device according to insurance type information indicating the insurance type input to the first input region and the pertaining information input to the second input region, the insurance type information and the pertaining information having been transmitted to the server device by the communication step.

16. An information processing method comprising:
an acquisition step of acquiring insurance type information indicating a type of insurance that a user purchases and pertaining information related to the insurance, and
a generation step of generating a candidate list of donation recipients including information regarding one or more donation recipients on a basis of the insurance type information and the pertaining information that have been acquired,
the steps being executed by a processor.
